# EUROPEAN PATENT SPECIFICATION

(11) **EP 3 001 160 B1**
(45) Date of publication and mention of the grant of the patent: **22.04.2020**
(21) Application number: 14186072.6
(22) Date of filing: 24.09.2014
(51) Int. Cl.: G01G 23/42, B41J 3/36, B41J 3/407, B41J 3/44, G01G 19/414, G07G 1/00

(54) **Attached printer for a weighing scale**
Befestigter Drucker für eine Waage
Imprimante pour une balance

(43) Date of publication of application: 30.03.2016
(73) Proprietor: Mettler-Toledo (Albstadt) GmbH, 72458 Albstadt (DE)
(72) Inventor: Kontschak, Dieter, 72474 Winterlingen (DE); Holike, Walter, 72351 Geislingen (DE); Kempf, Edgar, 72514 Inzigkofen (DE)
(74) Representative: Mettler-Toledo

(56) References cited:
- EP-A2- 0 199 201
- JP-U- S60 145 061
- US-A1- 2006 024 107

## Description

The invention concerns a printer for use with a weighing scale, particularly in retail food stores, for the printing of adhesive weight/price labels for goods such as meat, poultry, seafood and produce which are packaged and sold by weight in individually different quantities as requested by each customer.

The printers that are commonly used with weighing scales in retail stores are thermal printers which are well-proven in this application and relatively inexpensive in comparison to the cost of the scale itself. The entire printer aggregate, i.e. a module containing the print mechanism and associated controller electronics, can be purchased from specialized manufacturers. However, these printers have a limited lifetime, which is generally shorter than the typical operating life of a weighing scale. Thus, the ease of repairing or replacing a printer is an important design consideration in how to configure a system of a weighing scale and a printer working together.

The state of the art offers numerous examples of printers that work together with weighing scales. A common type of scale printer is configured as a stand-alone unit which is placed in the vicinity of the weighing scale and is typically of a compact, box-shaped design as illustrated, e.g. in US D574,427, with an on/off switch and a slot through which the labels or receipt tickets are delivered. A signal cable connects the printer to the weighing scale and a power cable connects the printer to a power outlet.

Also, many retail scales are equipped with printers that are built into the housing of the scale or are solidly attached to it. For example US 8,517,618 B2 shows a compact retail scale which has a printer contained in a drawer-like compartment that can be pulled out of the side of the scale housing to load a new supply of labels or to service the printer.

In the specific field of application that the present invention is concerned with, each of these two types of printers has its own advantages as well as drawbacks. stand-alone printer of the type illustrated in US D574,427 or US2006/024107 A1 or EP0199201 A2 can easily be replaced in case of failure by simply unplugging the defective printer from the weighing scale and replacing it with a functioning unit. On the other hand, a stand-alone printer takes up more space on the countertop, and the exposed power and signal cables create undesirable clutter and may also be objectionable from a sanitary point of view, particularly in a meat-, poultry- or seafood business.

A built-in printer as described in US 8,517,618 B2 eliminates the objections of wasted counter space and cable clutter but has the disadvantage that a defective printer cannot be easily removed and replaced with a new unit. A functional failure of a built-in or permanently attached printer normally requires a service call and also puts the weighing scale out of operation, since the operating procedures of a retail business will normally not allow a weighing transaction to be performed without printing a weight/price label.

In view of these respective advantages and disadvantages of stand-alone printers and built-in or attached printers for weighing scales, it became apparent to the applicants that there is a need for a built-in or attached scale printer which, in case of failure, could be replaced by the user as easily and inexpensively as a stand-alone printer. The present invention therefore has the objective to provide a printer which is mechanically and electrically attached to a weighing scale and which can be replaced easily and quickly without an outside service call.

This task is solved by a printer according to the independent main claim 1. Further configurations and embodiments of the subject of the invention are presented in the subordinate claims.

A printer for use with a weighing scale for the printing of transaction records in the form of tickets or adhesive labels is mechanically connected to and supported by a carrier structure. Electric power is delivered to the printer through a power connection and data are transmitted between the weighing scale and the printer through a data connection. According to the invention the mechanical connection between the carrier structure and the printer as well as the power and data connections are configured as one integral electromechanical plug-in connection. Thus, the printer can be mechanically installed on the carrier structure and simultaneously made electrically operative through an elementary straight-line plug-in movement of the printer relative to the carrier structure. Likewise, the printer can be uninstalled through a reverse straight-line movement of the printer relative to the carrier structure.

The inventive concept of a scale printer as a plug-in module that can be installed and uninstalled by an untrained person avoids the need for a service call to repair or replace a printer in case of a failure. In view of the low cost at which a state-of-the-art printer can be manufactured in a configuration according to the present invention, it becomes feasible for the user to treat the printer as a disposable item which, after it has been worn out from use, is easily removed and replaced with a new printer.

In an advantageous embodiment of the invention, the mechanical connection has the form of a plug-in carrier arm that enters into a corresponding socket recess of the printer. The plug-in carrier arm and the socket recess are of a complementary, mutually conforming shape to allow a form-fitting, keyed mechanical plug-in engagement of the plug-in carrier arm in the socket recess. The keyed configuration of the plug-in carrier arm and the socket recess ensure that the printer can be slid onto the plug-in carrier arm only in a precisely defined rotational orientation of the printer relative to the plug-in carrier arm, and that the printer remains immovably secured in the defined position on the plug-in carrier arm.

In preferred embodiments of the printer according to the invention, an electrical connector plug for the power and data transmission to the printer is arranged at a free end of the plug-in carrier arm and an electrical connector socket is arranged at the dead end of the tunnel-like socket recess. The connector plug and the connector socket are of complementary configuration and are oriented to enter into mutual engagement during a final phase of the plug-in movement. The aforementioned keyed configuration of the plug-in carrier arm and the socket recess ensure the correct insertion of the connector plug into the connector socket.

In a preferred embodiment of the keyed configuration, a guide track is formed or arranged on the plug-in carrier arm in a longitudinal direction of the latter, while the tunnel-like recess includes an insertion guide that cooperates with the guide track in guiding the plug-in movement of the plug-in carrier arm relative to the socket recess.

The printer is normally of the kind that uses label rolls or paper rolls from which the tickets or labels are spooled off as they are being printed. In preferred embodiments of the printer according to the invention the longitudinal direction of the tunnel-like recess, and thus the direction of the straight-line plug-in movement, runs parallel to the axis of rotation of the paper- or label roll.

In preferred arrangements of the printer according to the invention the carrier structure includes a substantially vertical support column to which the plug-in carrier arm is attached, standing out horizontally from the support column. The power and data transmission lines to the printer are completely enclosed inside the support column and the plug-in carrier arm.

In another preferred embodiment of the invention the support column is solidly connected to a chassis base of a weighing scale. Again as a central aspect of the invention, the power and data transmission lines are completely enclosed along their entire path from the chassis base through the support column and the plug-in carrier arm to the printer.

In another preferred embodiment, the aforementioned support column is solidly mounted on a table surface. Analogous to the preceding arrangements of the printer, the power and data transmission lines are completely enclosed along a path from a space below the table surface, through a passage opening in the table surface, through the support column and the plug-in carrier arm to the printer.

In a configuration that is sometimes referred to as a compact retail scale, the printer is attached directly to the chassis base. According to the invention the attachment can in this case be realized with the plug-in carrier arm that is connected directly to the chassis base, standing out horizontally from the latter, with the power and data transmission lines again completely enclosed along a path from the chassis base through the plug-in carrier arm to the printer.

It is generally advantageous if the arrangement of the printer on the plug-in carrier arm includes a means of locking the printer in place on the plug-in carrier arm. The locking means could for example have the form of a screw entering through a threaded hole into the tunnel-like recess. After the printer has been slid into its home position on the plug-in carrier arm, the screw is tightened so that it engages an indentation on the plug-in carrier arm, whereby the printer is protected from falling off the plug-in carrier arm. Of course, more extensive protection arrangements are also possible, including theft protection, for example with a combination lock securing the printer, wherein the locking and unlocking could even function electronically by entering a number combination through the operator keyboard or touch panel of the weighing scale.

A compartment for the paper roll or label roll inside the printer is preferably accessible from the front side of the printer, i.e. the side that faces the sales person at a store counter, so that a new roll can be loaded easily by the sales person.

The printer according to the invention meets the objective of being easily replaceable without a service call, as the exchange can be performed, e.g., by the same person who is trained to load a new label roll in the printer, through the following steps:
a. if a locking means is present, the locking means is released;
b. the printer is pulled off the plug-in carrier arm in a straight-line unplugging movement of the printer in the direction of the plug-in carrier arm;
c. another printer is mounted on the plug-in carrier arm in a straight-line plug-in movement of the printer in the reverse direction of the unplugging movement; and
d. if a locking means is present, the locking means is secured.

Details of the scale printer according to the invention are explained in the description of the examples that are illustrated in the drawings, wherein
- Fig. 1: shows a perspective frontal view of a printer according to the invention installed on the display column of a retail weighing scale;
- Fig. 2: represents a detailed frontal view of the printer of Figure 1 with a pole module and an adapter module;
- Fig. 3: represents a detailed rear view of the printer of Figure 1 with a pole module and an adapter module;
- Fig. 4: represents the printer of Figures 1 to 3 in the process of being uninstalled;
- Fig. 5: illustrates the printer of Figure 4 after the uninstallation has been completed; and
- Fig. 6: shows a cross-sectional view of the printer in the installed state on the plug-in carrier arm.

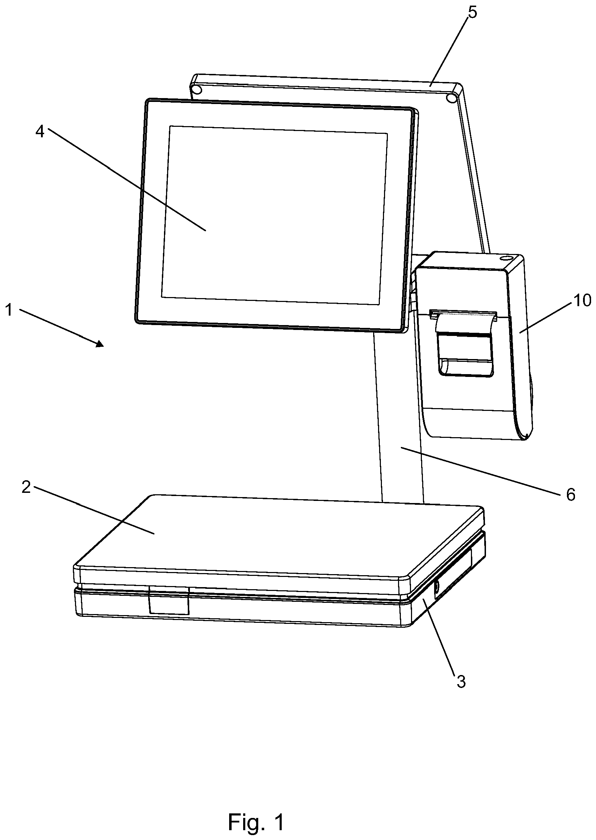

Figure 1 shows a retail scale 1 of a configuration that is sometimes referred to as a counter scale as it is designed to be placed on a sales counter or table of normal working height. A printer 10 according to the invention is releasably attached to a support column 6 in the manner described hereinafter. The support column 6 in the example of Figure 1 is attached to the chassis base 3 of a weighing platform unit 2. In addition to the printer 10, an operator panel 4, for example a touch screen, and a customer display screen 5 are also attached to the support column 6.

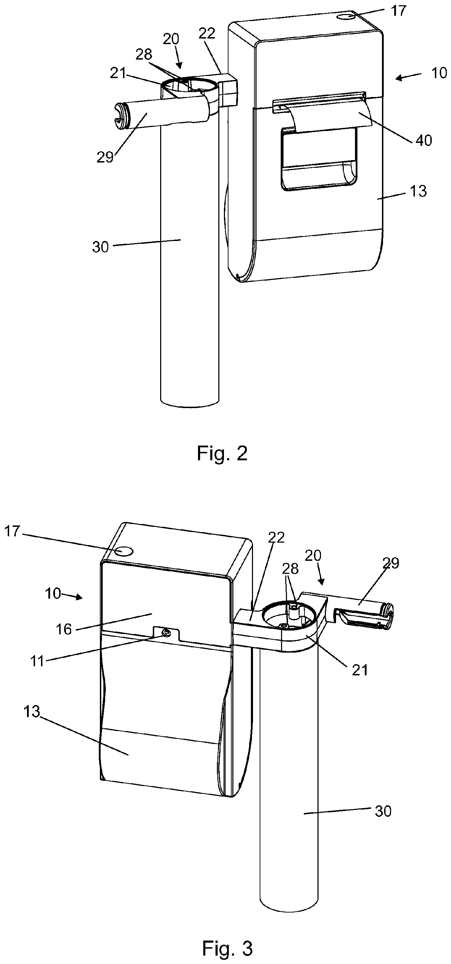

Figure 2 gives a closer view of the same printer 10 as seen from the side of a sales person operating the retail scale 1, as a sales ticket or label 40 is being delivered through a slot in the front of the printer housing 13. With the switch 17 at the top of the housing 13 functions of the printer 10 can be controlled. Such functions can be the controlling of the paper feed, controlling of the printing test and the switching on and off of the printer. Also shown in Figure 2 are essential parts of the support column 6 on which the printer 10 is mounted. A pole 30 in the form of a hollow cylinder carries an adapter module 20 with a central ring portion 21 that continues the hollow cylindrical profile of the pole 30. A plug-in carrier arm 22 for the printer 10 and a carrier arm 29 for a further accessory module of the weighing scale 1 extend horizontally from the central ring portion 21 of the adapter module 20. Typically, the plug-in carrier arm 29 is used to mount an operator panel in the form of a touch screen.

In a practical arrangement, the bottom end of the pole 30 would be connected - by way of an appropriately configured connecting member (not shown in the drawing) - to the chassis base 3 of the weighing platform 2 or to the top surface of the counter or table on which the weighing scale is standing. One or more cables for the data and power connection of the printer are routed through the inside of the hollow pole 30 and out to the printer 10 through the plug-in carrier arm 22. Two fastening elements 28 which can be seen at the open top end of the adapter 20 can be used to fasten, e.g., a pole extension, a further adapter for a customer display screen, or for a cap to close the open end of the adapter 20.

Figure 3 shows the same partial assembly 10, 20, 30 of the pole, adapter and printer from the opposite side, i.e. looking at the back of the printer 10. In addition to the elements identified in Figure 2, this drawing shows a locking screw 11 which serves to secure the printer on the plug-in carrier arm 22, and a snap cover 16.

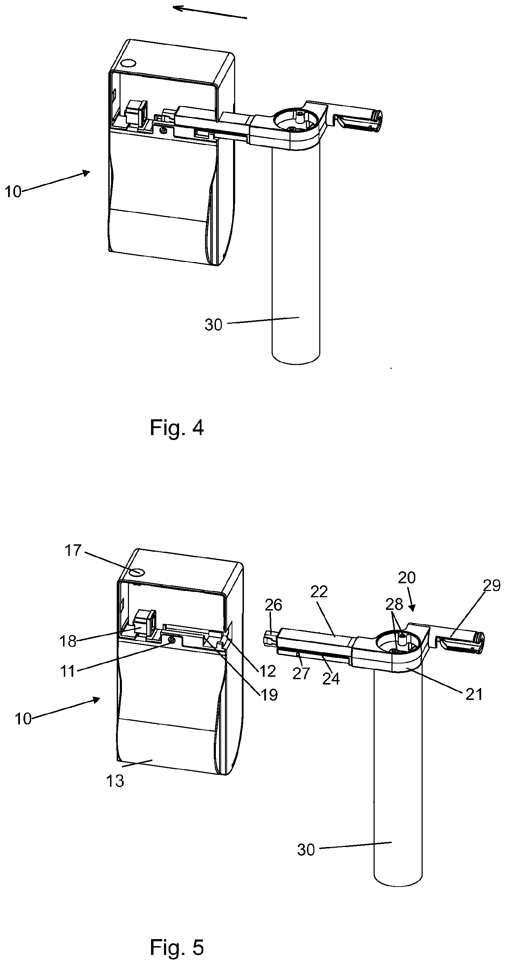

Figures 4 and 5 illustrate the physical elements of the plug-in connection as well as the process of removing the printer 10 from the plug-in carrier arm 22 through a straight-line pulling movement. The aforementioned snap cover 16 (whose function is otherwise irrelevant to the present invention) has been removed in Figures 4 and 5 in order to uncover the view at the interior of the socket recess 12. All of the relevant elements are identified by their reference symbols in Figure 5, which have therefore been omitted from Figure 4. To replace the printer 10 for example in case of a wear-out failure, the printer is first unlocked by loosening the locking screw 11, whereupon the printer 10 can be removed from the plug-in carrier arm 22 in a straight-line pulling movement as indicated by the arrow in Figure 4. The reverse process is subsequently followed for the installation of a replacement printer. A guide track 24 is formed on the plug-in carrier arm 22 which cooperates with an insertion guide 19 of the socket recess 12. In an end phase of the insertion movement, the connector plug 26 at the free end of the plug-in carrier arm 22 enters into engagement with the connector socket 18 of the socket recess 12. After the replacement printer has been pushed fully into its home position on the plug-in carrier arm 22, the locking screw 11 is tightened so that it engages the indentation 27 in the guide track 24 and thereby locks the printer 10 to the plug-in carrier arm 22.

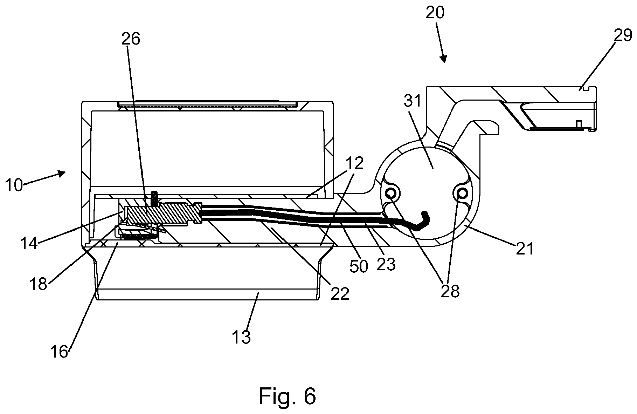

Figure 6 represents a cross-section of the installed printer 10 on the plug-in carrier arm 22. In relation to the arrangement of Figure 5, the view is directed from vertically above at a horizontal cross-sectional plane bisecting the adapter module 20. This drawing illustrates in particular the elements of the power- and data connection to the printer 10, i.e. the cable 50 coming up through the hollow space 31 inside the pole 30 and the ring-shaped portion 21 of the adapter 20 and continuing through the channel 23 of the plug-in carrier arm 22 to the connector plug 26 which is engaged in the connector socket 18 at the dead end of the socket recess 12 of the printer 10.

The plug-in carrier arm 22 could be configured so that it could be connected directly to the side of the chassis base of a weighing platform unit, so that the printer would be positioned at the level of the weighing platform unit instead of being elevated on a support column.

### List of Reference Symbols

- 1: scale, retail scale, counter scale
- 2: weighing platform unit
- 3: chassis base
- 4: operator panel, touch screen
- 5: customer display screen
- 6: support column
- 10: printer
- 11: locking screw
- 12: socket recess
- 13: printer housing
- 16: snap cover
- 17: switch
- 18: connector socket
- 19: insertion guide
- 20: adapter, adapter module
- 21: central ring portion of 20
- 22: plug-in carrier arm
- 23: channel of 22
- 24: guide track
- 26: connector plug
- 27: indentation
- 28: fastening element
- 29: carrier arm
- 30: pole module
- 31: hollow space inside 30
- 40: paper, ticket or label, transaction record
- 50: cable

## Claims

1. Printer (10) for use in direct data-transmitting connection with a weighing scale (1) for the printing of transaction records (40) in the form of tickets or adhesive labels, wherein the printer (10) is mechanically connected to the weighing scale (1) and supported by a carrier structure (6) of the weighing scale (1) through a mechanical connection (22), wherein electric power is delivered to the printer (10) through a power connection and data are transmitted between the weighing scale (1) and the printer (10) through a data connection, **characterized in that** said mechanical, power and data connections are configured as one integral electromechanical plug-in connection (22, 26, 18) whereby the printer (10) can be mechanically installed on the carrier structure (6) and simultaneously made electrically operative and ready to print said transaction records (40) through an elementary straight-line plug-in movement of the printer (10) relative to the carrier structure (6), and whereby the printer (10) can be uninstalled through a reverse straight-line movement of the printer (10) relative to the carrier structure (6).

2. The printer (10) according to claim 1, **characterized in that** the mechanical connection comprises a plug-in carrier arm (22) and the printer (10) comprises a socket recess (12), wherein the plug-in carrier arm (22) and the socket recess (12) are of a complementary, mutually conforming shape to allow a form-fitting, keyed mechanical plug-in engagement of the plug-in carrier arm (22) in the socket recess (12) with a defined rotational orientation of the printer (10) relative to the plug-in carrier arm (22) and thereby to establish said mechanical connection and support of the printer (10) on the plug-in carrier arm (22).

3. The printer (10) according to claim 2, **characterized in that** the plug-in carrier arm (22) comprises an electrical connector plug (26) which is located at a free end of the plug-in carrier arm (22) and that the printer (10) comprises an electrical connector socket (18) at a dead end of the socket recess (12), wherein the connector plug (26) and the connector socket (18) are of complementary configuration and are oriented to enter into mutual engagement during a final phase of said plug-in engagement and thereby to establish said power and data connection from the plug-in carrier arm (22) to the printer (10).

4. The printer (10) according to one of the claims 1 to 3, **characterized in that** the plug-in carrier arm (22) comprises a guide track (24) and the socket recess (12) comprises an insertion guide (19) cooperating with the guide track (24) in guiding the plug-in engagement of the plug-in carrier arm (22) into the socket recess (12).

5. The printer (10) according to one of the claims 1 to 4, wherein the printer (10) is a roll printer containing a label roll or paper rolls from which the tickets or labels (40) are spooled off as they are being printed and wherein the roll has an axis of rotation, **characterized in that** the socket recess (12) and the direction of the straight-line plug-in movement are parallel to the roll axis.

6. The printer (10) according to one of the claims 1 to 5, wherein the carrier structure comprises a substantially vertical support column (6) and the plug-in carrier arm (22) is attached to and standing out horizontally from the support column (6), **characterized in that** power and data transmission lines (50) are completely enclosed inside the support column (6) and the plug-in carrier arm (22).

7. The printer (10) according to claim 6, wherein the support column (6) is solidly connected to a chassis base (3) of a weighing platform (2), **characterized in that** power and data transmission lines (50) are completely enclosed along a path from the chassis base (3) through the support column (6) and the plug-in carrier arm (22) to the printer (10).

8. The printer (10) according to claim 6, wherein the support column (6) is solidly mounted on a table surface, **characterized in that** power and data transmission lines (50) are completely enclosed along a path from a space below the table surface, through a passage opening in the table surface, through the support column (6) and the plug-in carrier arm (22) to the printer (10).

9. The printer (10) according one of the claims 1 to 5, wherein the carrier structure comprises a chassis base (3) of a weighing platform (2) and the plug-in carrier arm (22) is attached to and standing out horizontally from the chassis base (3), **characterized in that** power and data transmission lines (50) are completely enclosed along a path from the chassis base (3) through the plug-in carrier arm (22) to the printer (10).

10. The printer (10) according to any of the preceding claims, further comprising a means of locking (11, 27) the printer (10) on the plug-in carrier arm (22).

11. The printer (10) according to any of the preceding claims, wherein the printer (10) has a front side which, in the operating state of the printer, faces towards a person operating the weighing scale and the printer, **characterized in that** said front side comprises a paper-loading access opening for placing a paper roll or label roll into the printer (10).

12. A method of exchanging a printer (10) according to one of the claims 1 to 11, **characterized in that**
a. if a locking means (11, 27) is present, the locking means is released;
b. the printer (10) is pulled off the plug-in carrier arm (22) in a straight-line unplugging movement of the printer in the direction of the plug-in carrier arm;
c. another printer (10) is mounted on the plug-in carrier arm (22) in a straight-line plug-in movement of the printer in the reverse direction of the unplugging movement; and
d. if a locking means (11, 27) is present, the locking means is secured.

## Patentansprüche

1. Drucker (10) zur Verwendung bei einer direkten Datenübertragungsverbindung mit einer Waage (1) zum Drucken von Transaktionsbelegen (40) in Form von Zetteln oder Aufklebern, wobei der Drucker (10) mit der Waage (1) mechanisch verbunden ist und von einer Trägerstruktur (6) der Waage (1) über eine mechanische Verbindung (22) abgestützt wird, wobei dem Drucker (10) über eine elektrische Verbindung elektrische Energie zugeführt wird und Daten zwischen der Waage (1) und dem Drucker (10) über eine Datenverbindung übertragen werden, **dadurch gekennzeichnet, dass** die mechanischen Energie- und Datenverbindungen als eine einzige einstückige elektromechanische Steckverbindung (22, 26, 18) konfiguriert sind, wodurch der Drucker (10) auf der Trägerstruktur (6) mechanisch installiert werden kann und gleichzeitig über eine einfache geradlinige Einsteckbewegung des Druckers (10) im Verhältnis zu der Trägerstruktur (6) elektrisch betriebsfähig und bereit zum Drucken der Transaktionsbelege (40) gemacht werden kann, und wodurch der Drucker (10) durch eine umgekehrte geradlinige Bewegung des Druckers (10) im Verhältnis zu der Trägerstruktur (6) deinstalliert werden kann.

2. Drucker (10) nach Anspruch 1, **dadurch gekennzeichnet, dass** die mechanische Verbindung einen einsteckbaren Trägerarm (22) umfasst und der Drucker (10) eine Buchsenvertiefung (12) umfasst, wobei der einsteckbare Trägerarm (22) und die Buchsenvertiefung (12) eine ergänzende, zueinander passende Form aufweisen, um einen formschlüssigen, verkeilten mechanischen Einsteckeingriff des einsteckbaren Trägerarms (22) in die Buchsenvertiefung (12) mit einer definierten Rotationsausrichtung des Druckers (10) im Verhältnis zu dem einsteckbaren Trägerarm (22) zu ermöglichen und dadurch die mechanische Verbindung und die Abstützung des Druckers (10) auf dem einsteckbaren Trägerarm (22) herzustellen.

3. Drucker (10) nach Anspruch 2, **dadurch gekennzeichnet, dass** der einsteckbare Trägerarm (22) einen elektrischen Anschlussstecker (26) umfasst, der sich an einem freien Ende des einsteckbaren Trägerarms (22) befindet, und dass der Drucker (10) eine elektrische Anschlussbuchse (18) an einem stumpfen Ende der Buchsenvertiefung (12) umfasst, wobei der Anschlussstecker (26) und die Anschlussbuchse (18) eine ergänzende Konfiguration aufweisen und ausgerichtet sind, um während einer Endphase des Einsteckeingriffs in einen gegenseitigen Eingriff einzutreten und um dadurch die Energie- und Datenverbindung von dem einsteckbaren Trägerarm (22) zu dem Drucker (10) herzustellen.

4. Drucker (10) nach einem der Ansprüche 1 bis 3, **dadurch gekennzeichnet, dass** der einsteckbare Trägerarm (22) eine Führungsbahn (24) umfasst und die Buchsenvertiefung (12) eine Einfügehilfe (19) umfasst, die beim Führen des Einsteckeingriffs des einsteckbaren Trägerarms (22) in die Buchsenvertiefung (12) mit der Führungsbahn (24) zusammenwirkt.

5. Drucker (10) nach einem der Ansprüche 1 bis 4, wobei der Drucker (10) ein Rollendrucker ist, der eine Etikettenrolle oder Papierrollen umfasstenthält, von der bzw. denen die Zettel oder Etiketten (40) abgerollt werden, wenn sie gedruckt werden, und wobei die Rolle eine Rotationsachse aufweist, **dadurch gekennzeichnet, dass** die Buchsenvertiefung (12) und die Richtung der geradlinigen Einsteckbewegung parallel zur Rollenachse sind.

6. Drucker (10) nach einem der Ansprüche 1 bis 5, wobei die Trägerstruktur eine im Wesentlichen senkrechte Stützsäule (6) umfasst und der einsteckbare Trägerarm (22) an der Stützsäule (6) befestigt ist und waagerecht davon absteht, **dadurch gekennzeichnet, dass** Energie- und Datenübertragungsleitungen (50) ganz im Innern der Stützsäule (6) und dem einsteckbaren Trägerarm (22) eingeschlossen sind.

7. Drucker (10) nach Anspruch 6, wobei die Stützsäule (6) mit einer Gestellbasis (3) einer Wägeplattform (2) fest verbunden ist, **dadurch gekennzeichnet, dass** Energie- und Datenübertragungsleitungen (50) entlang eines Wegs von der Gestellbasis (3) durch die Stützsäule (6) und den einsteckbaren Trägerarm (22) hindurch zu dem Drucker (10) ganz eingeschlossen sind.

8. Drucker (10) nach Anspruch 6, wobei die Stützsäule (6) an einer Tischfläche fest montiert ist, **dadurch gekennzeichnet, dass** Energie- und Datenübertragungsleitungen (50) entlang eines Wegs von einem Raum unterhalb der Tischfläche, durch eine Durchgangsöffnung in der Tischfläche hindurch, durch die Stützsäule (6) und den einsteckbaren Trägerarm (22) hindurch bis zu dem Drucker (10) ganz eingeschlossen sind.

9. Drucker (10) nach einem der Ansprüche 1 bis 5, wobei die Trägerstruktur eine Gestellbasis (3) einer Wägeplattform (2) umfasst und der einsteckbare Trägerarm (22) an der Gestellbasis (3) befestigt ist und waagerecht davon absteht, **dadurch gekennzeichnet, dass** Energie- und Datenübertragungsleitungen (50) entlang eines Wegs von der Gestellbasis (3) durch den einsteckbaren Trägerarm (22) hindurch bis zu dem Drucker (10) ganz eingeschlossen sind.

10. Drucker (10) nach einem der vorhergehenden Ansprüche, ferner umfassend ein Mittel zum Blockieren (11, 27) des Druckers (10) an dem einsteckbaren Trägerarm (22).

11. Drucker (10) nach einem der vorhergehenden Ansprüche, wobei der Drucker (10) eine Vorderseite aufweist, die im Betriebszustand des Druckers einer Person zugewandt ist, welche die Waage und den Drucker bedient, **dadurch gekennzeichnet, dass** die Vorderseite eine Papierladezugriffsöffnung zum Einlegen einer Papierrolle oder Etikettenrolle in den Drucker (10) umfasst.

12. Verfahren zum Austauschen eines Druckers (10) nach einem der Ansprüche 1 bis 11, **dadurch gekennzeichnet, dass**
a. falls ein Blockierungsmittel (11, 27) vorhanden ist, das Blockierungsmittel gelöst wird;
b. der Drucker (10) von dem einsteckbaren Trägerarm (22) in einer geradlinigen Ausziehbewegung des Druckers in der Richtung des einsteckbaren Trägerarms abgenommen wird;
c. ein anderer Drucker (10) auf dem einsteckbaren Trägerarm (22) in einer geradlinigen Einsteckbewegung des Druckers in der umgekehrten Richtung der Ausziehbewegung eingesetzt wird; und
d. falls ein Blockierungsmittel (11, 27) vorhanden ist, das Blockierungsmittel gesichert wird.

## Revendications

1. Imprimante (10) destinée à une utilisation en liaison de transmission de données directe avec une balance (1) pour l'impression d'enregistrements de transaction (40) sous la forme de tickets ou d'étiquettes adhésives, dans laquelle l'imprimante (10) est reliée mécaniquement à la balance (1) et supportée par une structure porteuse (6) de la balance (1) via une liaison mécanique (22), dans laquelle une puissance électrique est délivrée à l'imprimante (10) via une liaison électrique et des données sont transmises entre la balance (1) et l'imprimante (10) via une liaison de données, **caractérisée en ce que** lesdites liaisons mécanique, électrique et de données sont configurées en tant que liaison enfichable électromécanique intégrale (22, 26, 18) moyennant quoi l'imprimante (10) peut être installée mécaniquement sur la structure porteuse (6) et, de manière simultanée, rendue électriquement opérationnelle et prête à imprimer lesdits enregistrements de transaction (40) via un mouvement d'enfichage linéaire élémentaire de l'imprimante (10) par rapport à la structure porteuse (6), et moyennant quoi l'imprimante (10) peut être désinstallée via un mouvement linéaire inverse de l'imprimante (10) par rapport à la structure porteuse (6).

2. Imprimante (10) selon la revendication 1, **caractérisée en ce que** la liaison mécanique comprend un bras porteur enfichable (22) et l'imprimante (10) comprend un évidement de douille (12), dans laquelle le bras porteur enfichable (22) et l'évidement de douille (12) ont une forme complémentaire se conformant mutuellement pour permettre une venue en prise enfichable mécanique clavetée à ajustement de forme du bras porteur enfichable (22) dans l'évidement de douille (12) avec une orientation de rotation définie de l'imprimante (10) par rapport au bras porteur enfichable (22) et établir ainsi ladite liaison mécanique et le support de l'imprimante (10) sur le bras porteur enfichable (22).

3. Imprimante (10) selon la revendication 2, **caractérisée en ce que** le bras porteur enfichable (22) comprend une fiche de connecteur électrique (26) qui est située à une extrémité libre du bras porteur enfichable (22) et **en ce que** l'imprimante (10) comprend une douille de connecteur électrique (18) à une extrémité d'ancrage de l'évidement de douille (12), dans laquelle la fiche de connecteur (26) et la douille de connecteur (18) sont de configuration complémentaire et sont orientées pour venir mutuellement en prise pendant une phase finale de ladite venue en prise enfichable et établir ainsi ladite liaison électrique et de données du bras porteur enfichable (22) à l'imprimante (10).

4. Imprimante (10) selon l'une des revendications 1 à 3, **caractérisée en ce que** le bras porteur enfichable (22) comprend un rail de guidage (24) et l'évidement de douille (12) comprend un guide d'insertion (19) coopérant avec le rail de guidage (24) pour guider la venue en prise enfichable du bras porteur enfichable (22) dans l'évidement de douille (12).

5. Imprimante (10) selon l'une des revendications 1 à 4, dans laquelle l'imprimante (10) est une imprimante à rouleau contenant un rouleau d'étiquettes ou des rouleaux de papier depuis lesquels les tickets ou étiquettes (40) sont déroulés au fur et à mesure de leur impression et dans laquelle le rouleau a un axe de rotation, **caractérisée en ce que** l'évidement de douille (12) et la direction du mouvement d'enfichage linéaire sont parallèles à l'axe de rouleau.

6. Imprimante (10) selon l'une des revendications 1 à 5, dans laquelle la structure porteuse comprend une colonne de support (6) sensiblement verticale et le bras porteur enfichable (22) est fixé à et fait saillie horizontalement depuis la colonne de support (6), **caractérisée en ce que** des lignes de transmission électrique et de données (50) sont complètement enfermés dans la colonne de support (6) et le bras porteur enfichable (22).

7. Imprimante (10) selon la revendication 6, dans laquelle la colonne de support (6) est solidement reliée à une base de châssis (3) d'une plate-forme de pesage (2), **caractérisée en ce que** des lignes de transmission électrique et de données (50) sont complètement enfermées le long d'un trajet allant de la base de châssis (3) à l'imprimante (10) en passant par la colonne de support (6) et le bras porteur enfichable (22).

8. Imprimante (10) selon la revendication 6, dans laquelle la colonne de support (6) est solidement montée sur une surface de table, **caractérisée en ce que** des lignes de transmission électrique et de données (50) sont complètement enfermées le long d'un trajet allant d'un espace sous la surface de table, via une ouverture de passage dans la surface de table, à l'imprimante (10) en passant par la colonne de support (6) et le bras porteur enfichable (22).

9. Imprimante (10) selon l'une des revendications 1 à 5, dans laquelle la structure porteuse comprend une base de châssis (3) d'une plate-forme de pesage (2) et le bras porteur enfichable (22) est fixé à et fait saillie horizontalement depuis la base de châssis (3), **caractérisée en ce que** des lignes de transmission électrique et de données (50) sont complètement enfermées le long d'un trajet allant de la base de châssis (3) à l'imprimante (10) en passant par le bras porteur enfichable (22).

10. Imprimante (10) selon l'une quelconque des revendications précédentes, comprenant en outre un moyen de verrouillage (11, 27) de l'imprimante (10) sur le bras porteur enfichable (22).

11. Imprimante (10) selon l'une quelconque des revendications précédentes, dans laquelle l'imprimante (10) présente une face avant qui, dans l'état de fonctionnement de l'imprimante, est orientée vers une personne faisant fonctionner la balance et l'imprimante, **caractérisée en ce que** ladite face avant comprend une ouverture d'accès de chargement de papier pour placer un rouleau de papier ou d'étiquettes dans l'imprimante (10).

12. Procédé de remplacement d'une imprimante (10) selon l'une des revendications 1 à 11, **caractérisé en ce que**
a. si un moyen de verrouillage (11, 27) est présent, le moyen de verrouillage est libéré ;
b. l'imprimante (10) est retirée du bras porteur enfichable (22) dans un mouvement de débranchement linéaire de l'imprimante dans la direction du bras porteur enfichable ;
c. une autre imprimante (10) est montée sur le bras porteur enfichable (22) dans un mouvement d'enfichage linéaire de l'imprimante dans la direction inverse du mouvement de débranchement ; et
d. si un moyen de verrouillage (11, 27) est présent, le moyen de verrouillage est bloqué.
